# EUROPEAN PATENT SPECIFICATION

(11) **EP 2 370 193 B1**
(45) Date of publication and mention of the grant of the patent: **14.11.2012**
(21) Application number: 09796663.4
(22) Date of filing: 04.12.2009
(51) Int. Cl.: B01D 15/18, B01D 15/22, F16K 11/02, G01N 30/60, G01N 30/46

(54) **A CHROMATOGRAPHIC SEPARATION DEVICE WITH VARIABLE LENGTH AND A METHOD FOR ITS USE**
CHROMATOGRAPHISCHE TRENNUNGSVORRICHTUNG MIT VARIABLER LÄNGE UND EINEM VERFAHREN ZU DEREN VERWENDUNG
DISPOSITIF DE SÉPARATION CHROMATOGRAPHIQUE DE LONGUEUR VARIABLE ET SON PROCÉDÉ D'UTILISATION

(30) Priority: 04.12.2008 NL 1036280; 11.05.2009 EP 09159866
(43) Date of publication of application: 05.10.2011
(73) Proprietor: Vrije Universiteit Brussel, 1050 Brussel (BE)
(72) Inventor: DESMET, Gert, B-1982 Elewijt (BE); LESTREMAU, François, 60500 Chantilly (FR); CABOOTER, Deirdre, B-2930 Brasschaat (BE)
(74) Representative: Paemen, Liesbet R.J.
(86) International application number: PCT/EP2009/066434
(87) International publication number: WO 2010/072546

(56) References cited:
- EP-A1- 1 089 074
- DE-A1-102005 025 440
- DE-B- 1 175 915
- FR-A- 1 221 186
- FR-A1- 2 794 836
- GB-A- 849 408
- PACKHAM A J: "COMPLEX SAMPLE ANALYSIS BY COLUMN-SWITCHING HIGH PERFORMANCE LIQUIDCHROMATOGRAPHY" LC-GC INTERNATIONAL (LIQUID AND GAS CHROMOTOGRAPHY), EUGENE, OR, US, vol. 4, no. 11, 1 January 1991 (1991-01-01), pages 26-29, XP000253564

## Description

### FIELD OF INVENTION

The present invention enables the automatic change of the number of segments involved in a coupled chromatographic column system, without the need to physically detach and attach the individual segments. The present invention further relates to a method for performing method development in chromatography and for selecting the optimal separation conditions to perform a chromatographic separation using the system of the present invention.

### BACKGROUND

Traditionally, method development in liquid chromatography is carried out on a single column with given length, using a variation of the mobile phase composition or the temperature as a means to enhance the resolution of the separation (Neue, 1997). However, given the diversity of separation problems, there are many cases wherein the employed column is either too long to achieve the desired resolution (leading to unnecessary long analysis times) or too short to yield the desired separation efficiency.

Given that method development is usually in part carried out as a stand-alone application or runs over night, it would hence be very advantageous if during method development the instrument could switch to a shorter or a longer column without the need for a manual interference. Given that generally one does not know beforehand which column length would be most appropriate, it would be even more advantageous if the decision to switch to a longer or a shorter column could also be automated, using a robust algorithm that benefits maximally from the insight in the sample composition gained by doing the same separation on columns with a different length.

In the past few years, instrument manufacturers have tried to speed up method developing by building instruments that allow to test several columns and mobile phase conditions in parallel (http://www.zinsserna.com/parallel hplc.htm, http://www.eksigent.com/hplc/products/ expressLC/800.php). Such parallel systems however do not allow to couple one column after the other in such a way that the columns making up a shorter coupled column sequence are used as a sub-set of the columns that are needed to create a longer coupled column sequence.

The possibility to couple different columns in series without a significant loss in separation resolution is known in the art (Lestremau et al., J. Chromatogr. A, 1109, 191-196, 2006; Lestremau et al., J. Chromatogr. A, 1138, 120-131, 2007). Up to now, however, each change of the column sequence length requires a manual detachment or attachment of the capillary connection pieces. As a consequence, changing the length of coupled column system cannot be carried out in an automated way, as would for example be needed during an overnight series of method development runs. In addition, since the coupling pieces are often deformed during the coupling operation, each physical reconnection of the columns generally requires the use of a new set of coupling pieces, hence increasing the consumables cost. It would therefore also be very advantageous if effective column length changes could be made without having to fasten and loosen the connection pieces.

Another system that has recently been introduced is the POPLC system (K. Bischoff et al., W02006/125564, 2006). This system uses a series connection of different column segments, placed one on top of the other. This system has been designed to allow testing various stationary phase types and also offers the possibility to change the column length by adding or removing segments. Changing the segments however also has to occur manually, so that the column length cannot be changed automatically or in a computer controlled way.

It is therefore one of the major objectives of the present invention to provide a technical solution enabling the automatic change of the number of segments involved in a coupled column system, without the need to physically detach and attach the individual segments and to provide a method describing how this device can be used to accelerate method development.

Another highly desired effect would be that a change in column length does not have to be accompanied by a lengthening or a shortening of the connection capillaries. In all instruments known in the art, the injector and detector are put at fixed positions and a change in column length therefore always inevitably leads to a change in required connection capillary length. This leads to a perverse effect, in that the shortest columns, which are most prone to extra-column band broadening, need to be coupled with the longest connection capillaries.

### SUMMARY

In all devices and methods according to the present invention, the effective separation length of the flow path running between a time-pulsed injector and a chromatographic detector can be changed using at least one automatic flow switching device to change the number of separation columns or column segments taking part in the uninterrupted flow path running from injector to detector. All disclosed devices and methods according to the present invention therefore have at least one separation medium distributed over N columns, with N being an integer number larger than 1, characterized therein that at least two of said columns have their first end connected to a flow switching device that is arranged with an internal network of connection recesses and a set of inlet and outlet ports, and wherein the fluidic manifold formed by said connection capillaries, the connection recesses in said flow switching device and the individual separation columns provides an uninterrupted flow path from injector to detector, and wherein the flow switch positions of said flow switching device determine the number of columns taking part in said uninterrupted flow path.

As a consequence, changes in total separation path length can be effectuated without having to physically attach or detach the individual separation columns or column segments, or displace the injector and detector unit or change the length of the connection capillaries to the injector and the detector. In some of the preferred embodiments according to the present invention, said flow switching device is a rotor-stator valve. Preferably said flow switching device is motor-driven, so that the column length adjustment can be carried out in a fully automated way.

In a preferred embodiment, said motor-driven flow switching devices are externally controlled using a software program allowing to autonomously decide whether the separation could possibly be further improved by switching to a longer column length is needed, thereby further increasing the number of resolved components or whether it should be attempted to reduce the total column length thereby reducing the total analysis time.

### DESCRIPTION OF THE DRAWINGS

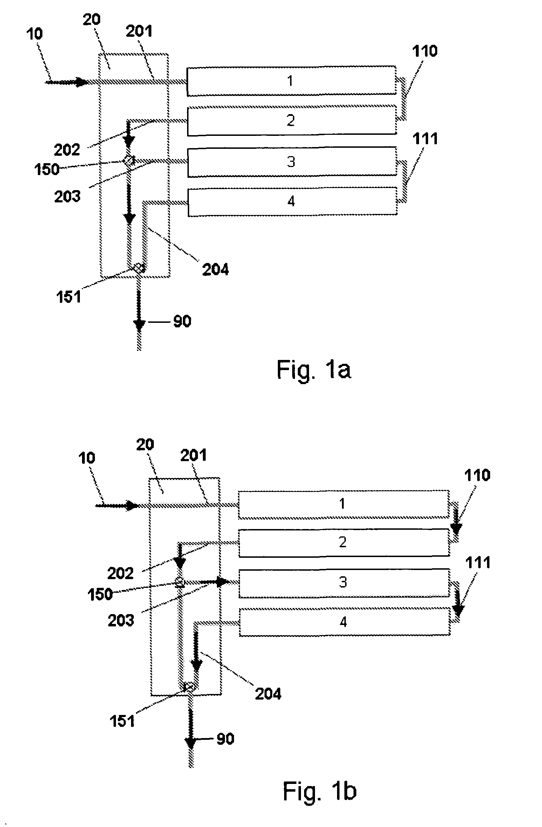

**Figure 1****.** Possible variant of one of the coupled column systems according to the present invention, using a microfluidic flow switching device with three-way valves allowing to connect either **(a)** columns 1, 2 or **(b)** columns 1, 2, 3, 4 in an uninterrupted flow path between injector and detector.

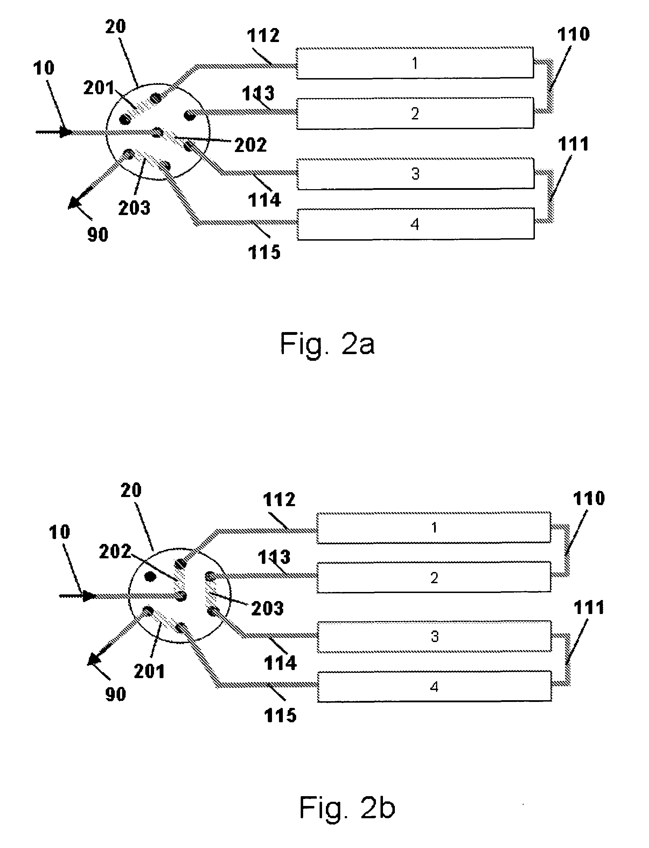

**Figure 2****.** Possible variant of one of the coupled column systems according to the present invention, using a rotor-stator valve flow switching device allowing to connect either **(a)** columns 3, 4 or **(b)** columns 1, 2, 3, 4 in an uninterrupted flow path between injector and detector.

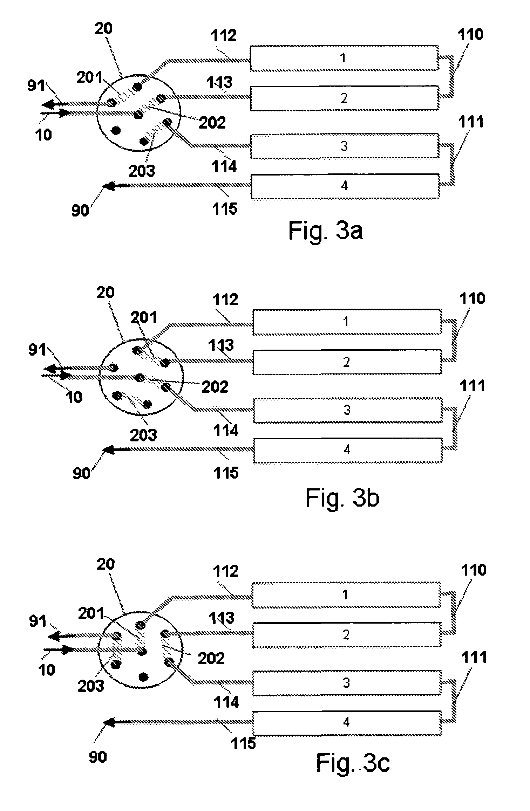

**Figure 3****.** Possible variant of one of the coupled column systems according to the present invention, using a rotor-stator valve flow switching device allowing to connect either **(a)** columns 1, 2 or **(b)** columns 3, 4 or **(c)** columns 1, 2, 3, 4 in an uninterrupted flow path between injector and detector.

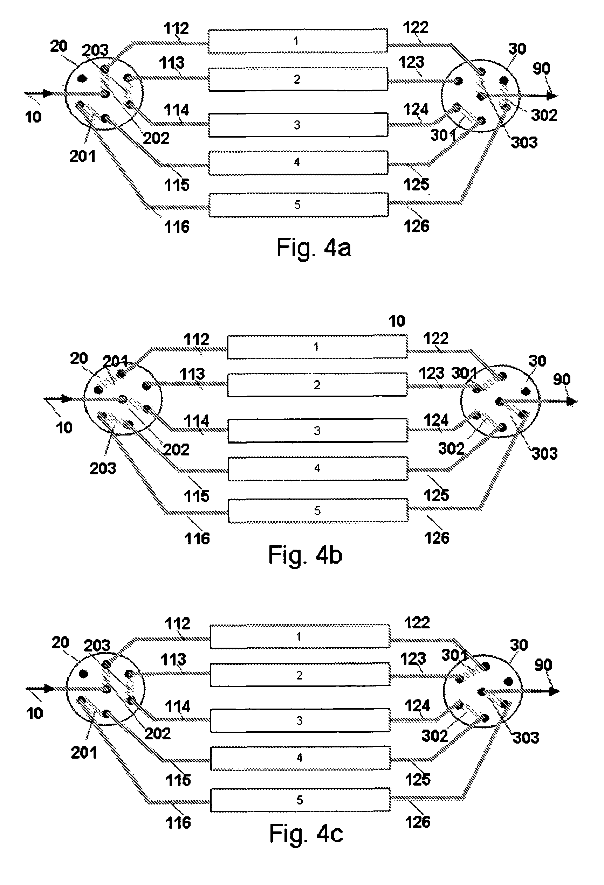

**Figure 4****.** Possible variant of one of the coupled column systems according to the present invention, using two rotor-stator valve flow switching devices allowing to connect either **(a)** column 1 or **(b)** columns 3, 4, 5 or **(c)** columns 1, 2, 3, 4, 5 in an uninterrupted flow path between injector and detector.

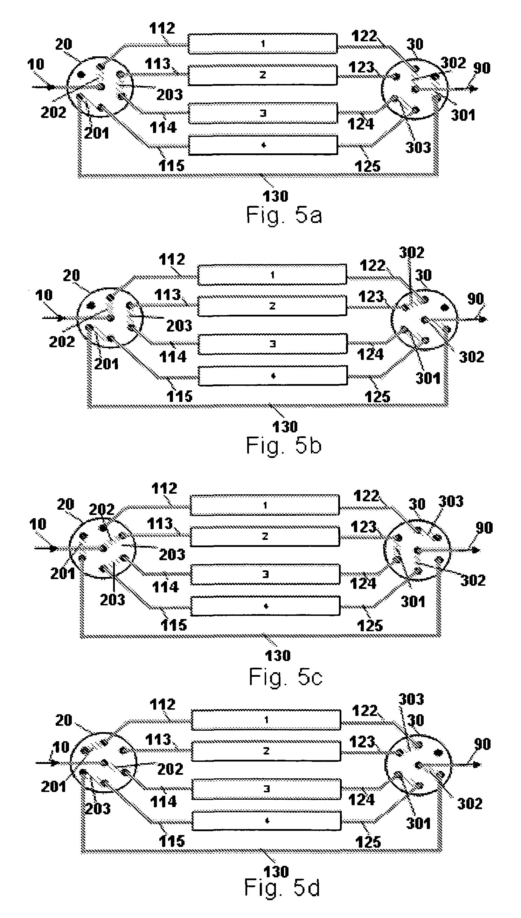

**Figure 5****.** Possible variant of one of the coupled column systems according to the present invention, using two rotor-stator valve flow switching devices and an additional connection capillary allowing to connect either **(a)** column 1 or **(b)** columns 1, 2, 3, 4 or **(c)** columns 2, 3, 4 or **(d)** columns 3, 4 in an uninterrupted flow path between injector and detector.

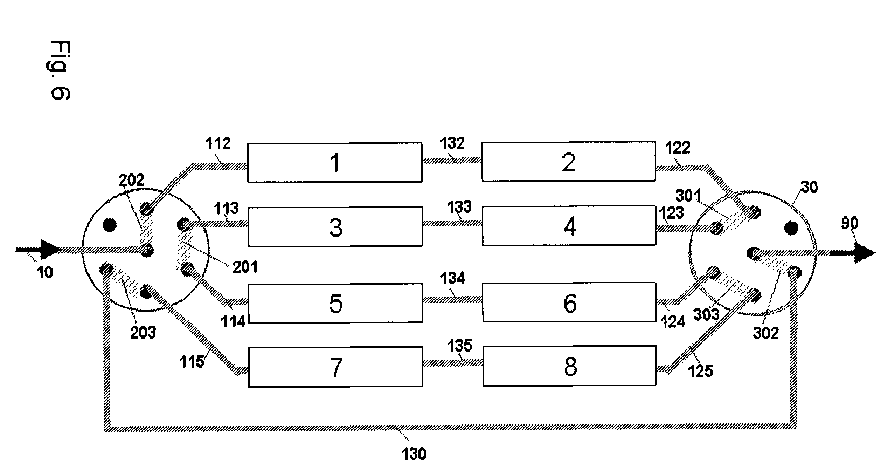

**Figure 6****.** Possible variant of one of the coupled column systems according to the present invention, using two rotor-stator valve flow switching devices and having two separation columns or column segments interposed per connection path running between the first and the second rotor-stator valve.

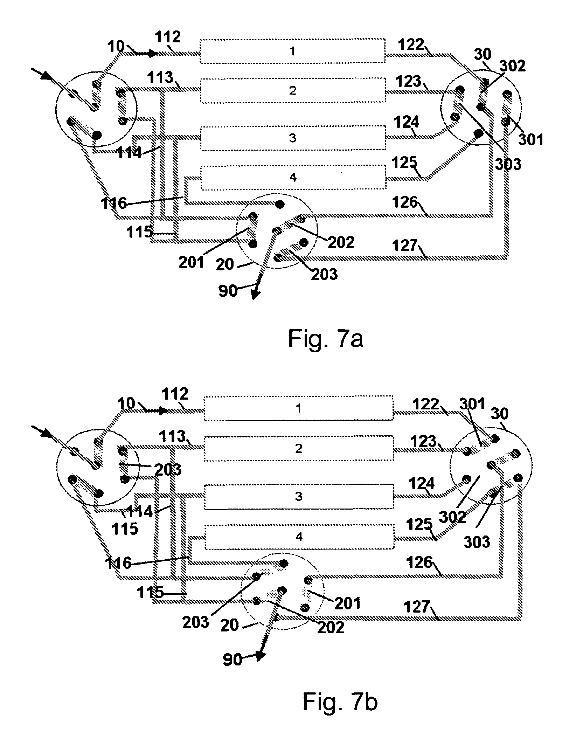

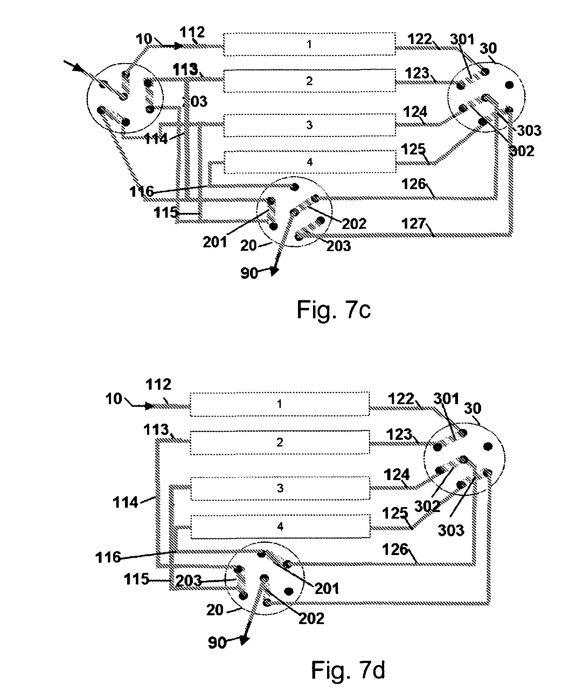

**Figure 7****.** Possible variant of one of the coupled column systems according to the present invention, using two rotor-stator valve and additional connection capillaries allowing to connect either **(a)** column 1 or **(b)** columns 1, 2 or **(c)** columns 1, 2, 3 or **(d)** columns 1, 2, 3, 4 in an uninterrupted flow path between injector and detector.

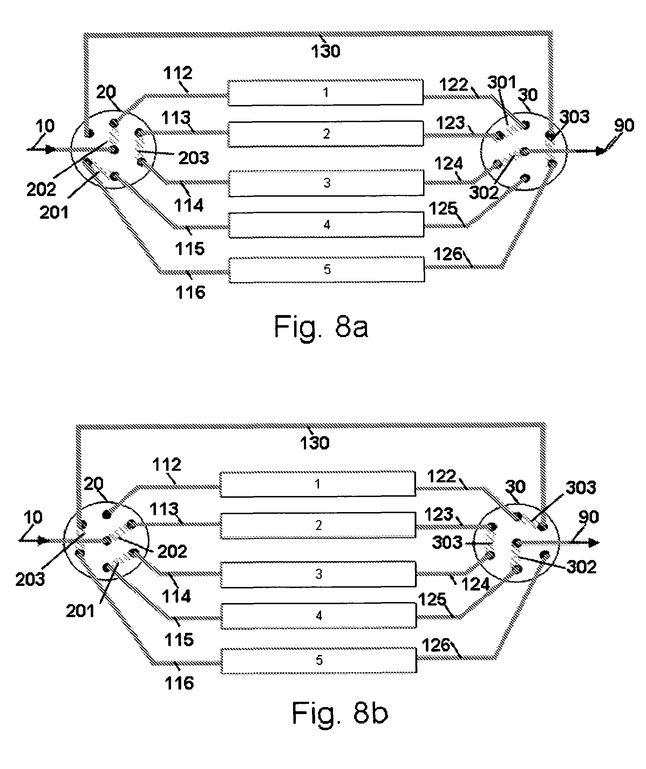

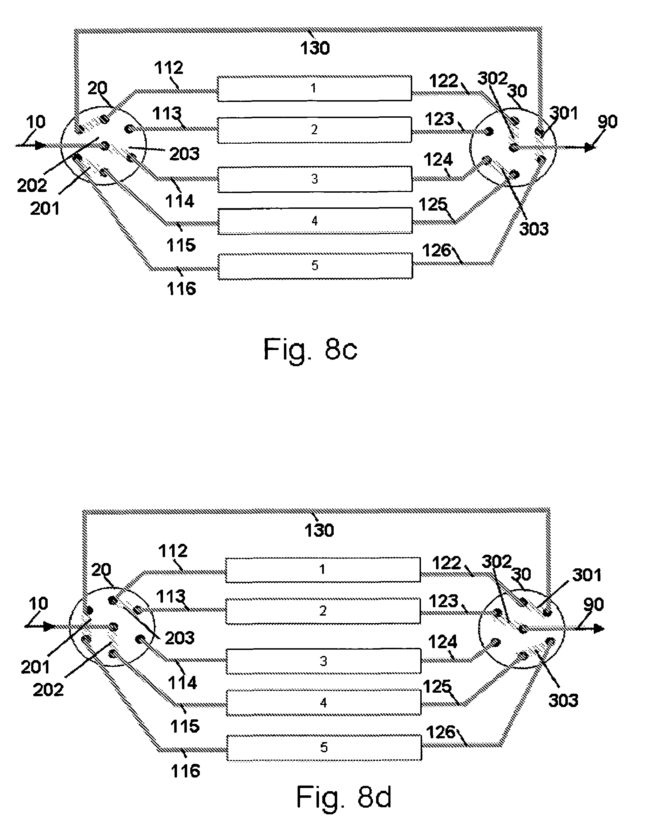

**Figure 8****.** Possible variant of one of the coupled column systems according to the present invention, using two rotor-stator valve flow switching devices and an additional connection capillary allowing to connect **(a)** columns 1, 2, 3 or **(b)** columns 2, 3, 4 or **(c)** columns 3, 4, 5, 1 or **(d)** columns 4, 5, 1, 2 in an uninterrupted flow path between injector and detector.

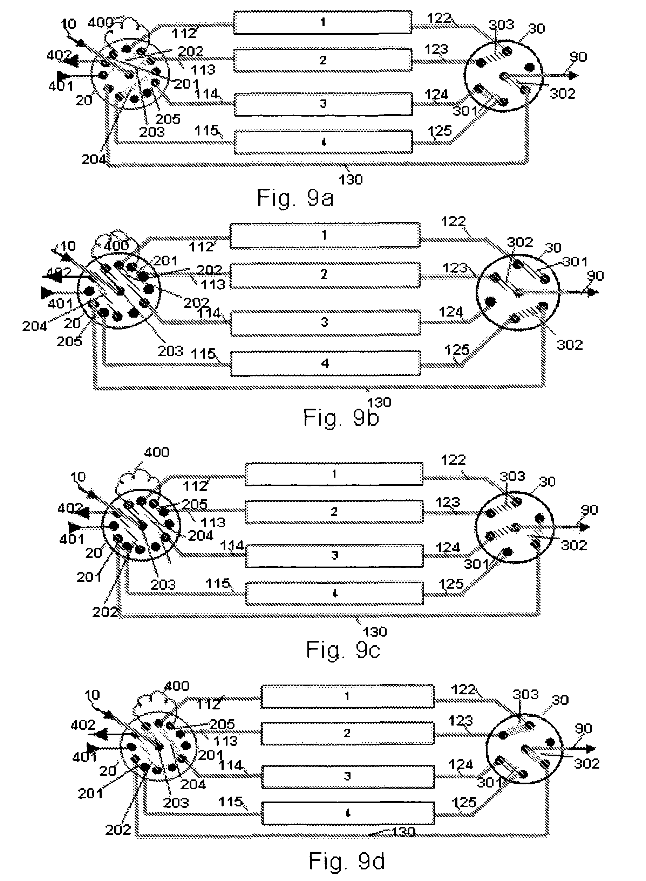

**Figure 9****.** Possible variant of one of the coupled column systems according to the present invention, using two rotor-stator valve flow switching devices with a sample loop integrated in one of said rotor-stator valves, showing **(a)** the sample loop filling position, **(b)** injection and separation in column 2, **(c)** injection and separation in the column sequence 1, 2, 3 or **(d)** injection and separation in the column sequence 1, 2, 3, 4.

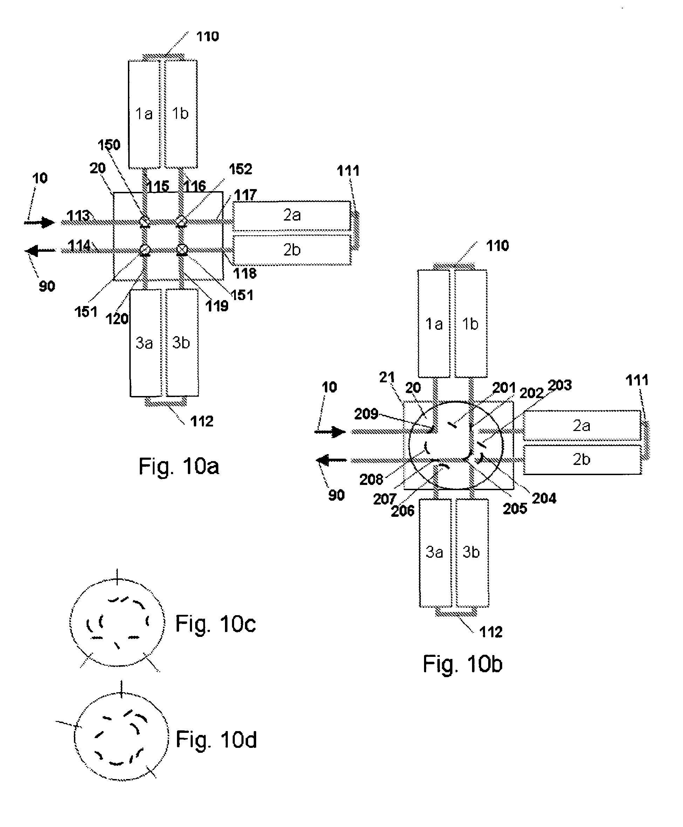

**Figure 10****.** Possible variant of one of the coupled column systems according to the present invention, using **(a)** a microfluidic flow switching device containing four three-way valves and **(b)** a rotor-stator valve with specially arranged connection groove pattern positioned such that it only connects column 1a, 1b, or **(c)** columns 1a, 1b, 2a, 2b and **(d)** columns 1a, 1b, 2a, 2b, 3a, 3b in an uninterrupted flow path between injector and detector.

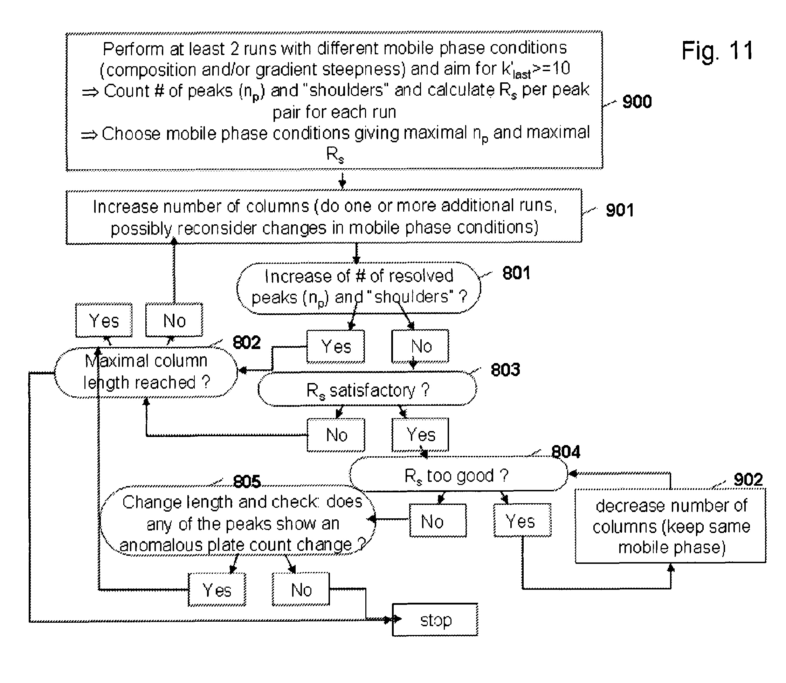

**Figure 11****.** Possible lay-out of a method allowing the search for the optimal separation conditions and the optimal column length for the complete separation of an unknown sample.

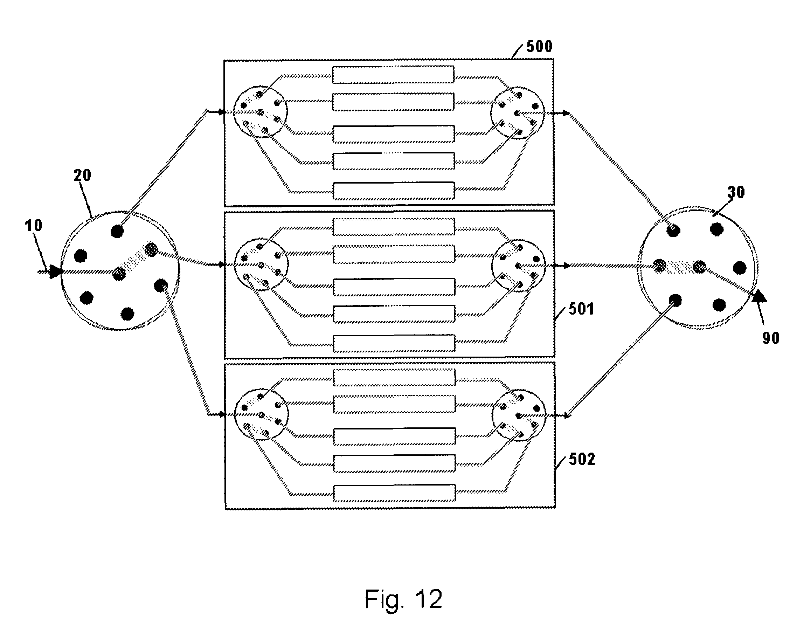

**Figure 12****.** Possible variant of one of the coupled column systems according to the present invention, wherein three independent coupled column units of the type shown in Fig. 4 are coupled in parallel using two additional rotor-stator valves.

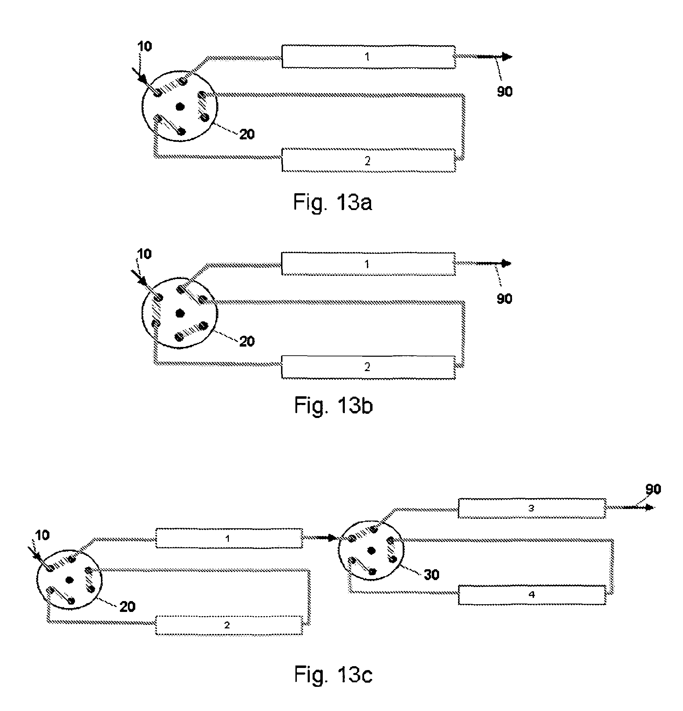

**Figure 13****.** Possible variant of one of the coupled column systems according to the present invention, using a standard two-position, six port rotor-stator valve, two columns and one additional return capillary allowing to couple **(a)** column 1 and **(b)** columns 1, 2 in an uninterrupted flow path between injector and detector. In **(c),** two additional columns, one additional two-position, six port rotor-stator valve and one additional return capillary are used to increase the number of coupling possibilities.

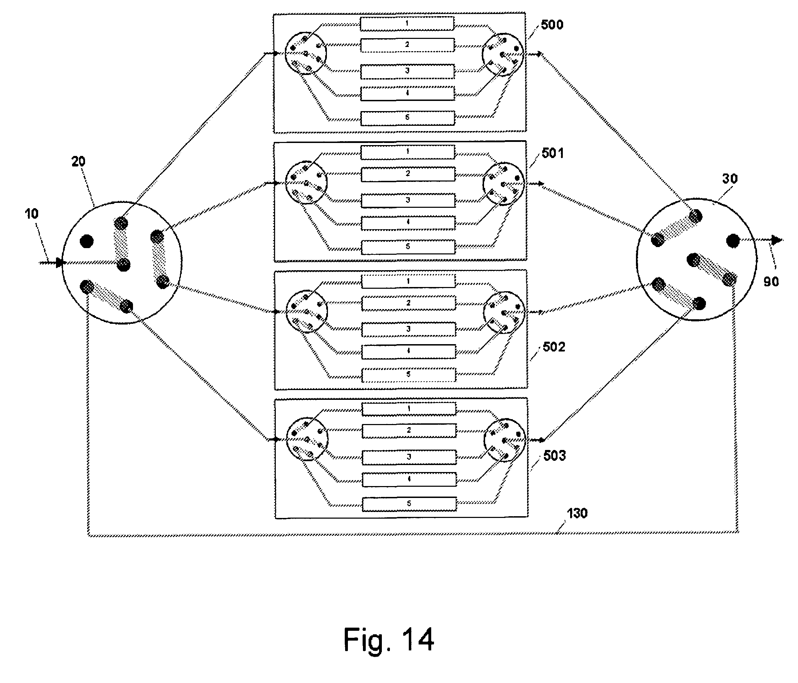

**Figure 14****.** Possible variant of one of the coupled column systems according to the present invention, wherein the individual column elements of the device shown in Fig. 5 in turn also comprise a chromatographic separation system comprises two rotor-stator valves and a bundle of 5 column segments, wherein each of the column segments has its first end connected to the first of said rotor-stator valves and its second end to the second of said rotor-stator valves.

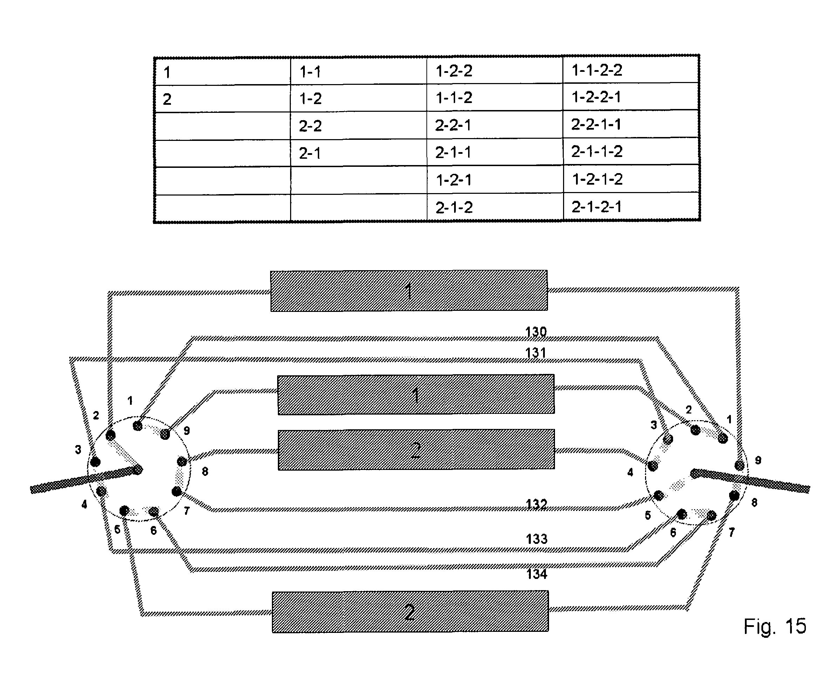

**Figure 15****.** Possible variant of one of the coupled column systems according to the present invention, wherein the system comprises a combination of 2 rotor-stator valves with 9 circumferential ports and being interconnected by 4 columns separation columns (two of type 1 and two of type 2) and 5 connection capillaries (130,131,132,133,134).

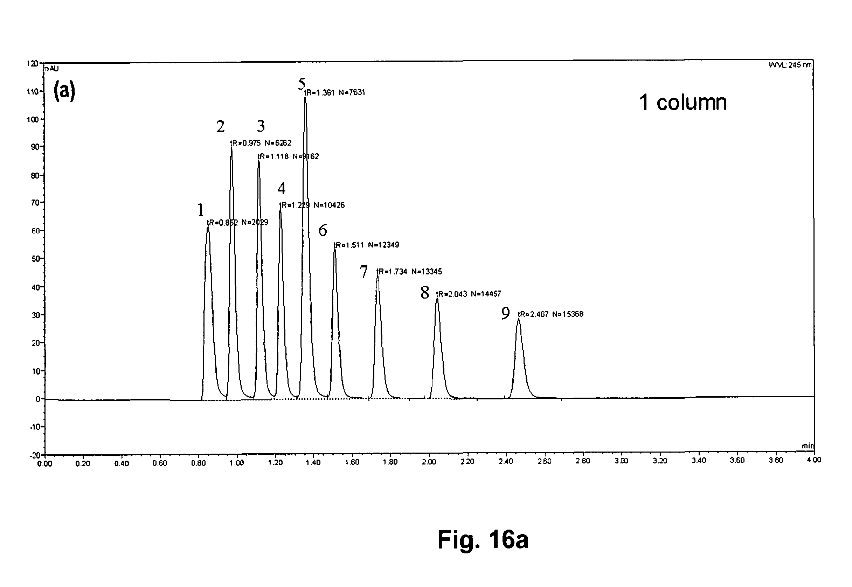

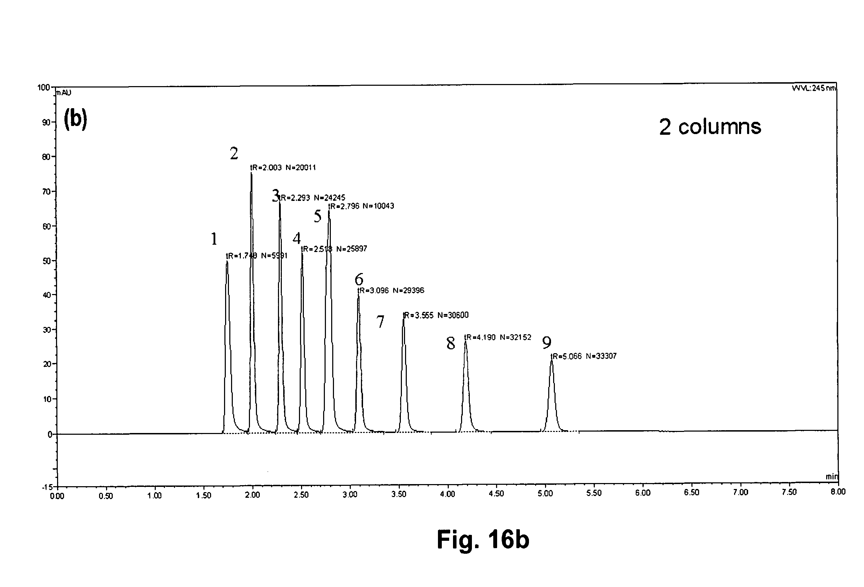

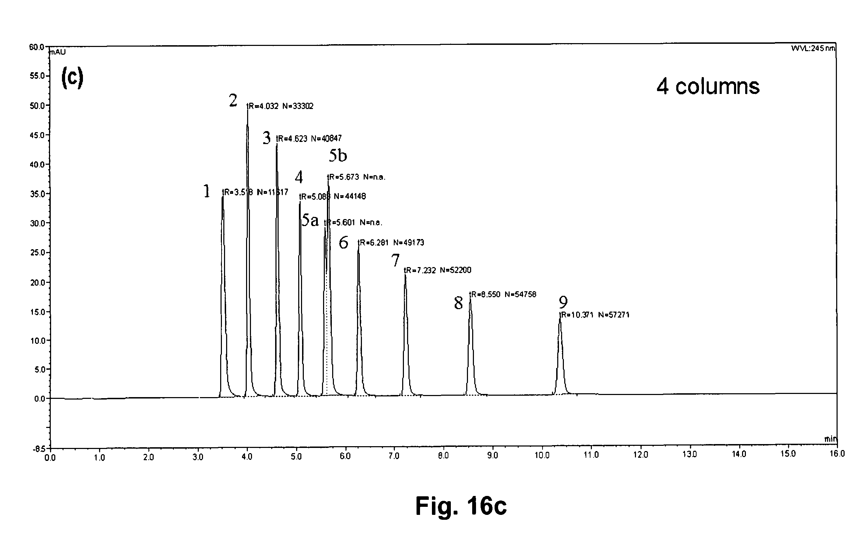

**Figure 16** **(a, b and c).** Chromatograms obtained for an alkylphenone mixture on (a) a chromatographic separation system according to the present invention wherein the mixture is flown through a serial arrangement of a single separation column, (b) two separation columns and (c) four separation columns.

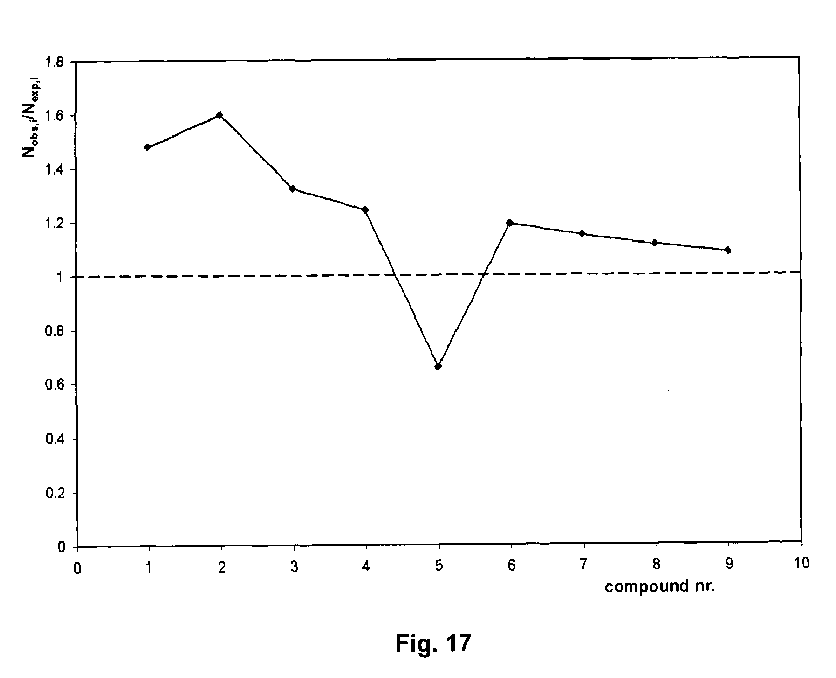

**Figure 17****.** Graphical representation showing the ratio of observed (Nobs,i) over theoretically (Ntheo,i) expected efficiencies for each of the analytes in the alkylphenone mixture analyzed in Fig. 16. The dashed line corresponds to Nobs,i/Ntheo,i = 1.

### DETAILED DESCRIPTION OF THE INVENTION

Those skilled In the art will appreciate that the term separation medium is used here to denote all possible structures that can be used as a support for the retentive layer or the adsorption sites needed to induce a chromatographic separation or that is needed to provide a restricted access needed in size exclusion-based separations. Without being limitative, examples of separation media known today are porous and non-porous particles, silica and polymeric monoliths, pillar arrays, fibers and sieving matrices.

For the present purposes, a useful definition for a chromatographic run is the time elapsing between the injection of the sample and the elution of the last compound of the sample, and if necessary, also including the time needed to recondition or regenerate the column. All methods and embodiments according to the present invention relate to both gradient and isocratic analytical separations.

Fig. 1 shows one of the simplest embodiments according to the present invention. The arrow 10 represents a fluidic flow coming from a pump and an injection device, such as an injection valve, and entering a flow switching device 20 carrying internal connection channels 201,202,203,204 and two three-way valves 150,151. The system further comprises 4 chromatographic columns 1,2,3,4, two additional coupling capillaries 110 and 111 and a fluidic outlet 90 connecting to a detector device. With the position of the three-way valves shown in Fig. 1a, a two-coupled-columns system (involving columns 1,2) is obtained, while switching to the position of the three-way valves shown in Fig. 1b, a four-coupled-columns system is obtained.

In a first embodiment, the present invention provides a chromatographic system to separate a sample mixture into its different components, comprising an injector performing time-pulse injections, a detector, connection capillaries, and at least one separation medium distributed over N columns segments, with N being an integer number larger than 1, characterized therein that at least two of said columns segments have their first end connected to a flow switching device that is arranged with an internal network of connection recesses and a set of inlet and outlet ports, and wherein the fluidic manifold formed by said connection capillaries, the connection recesses in said flow switching device and the individual separation columns provides an uninterrupted flow path from injector to detector, and wherein at least two of the different flow switch positions of said flow switching device determine a different number or combination of column segments taking part in said uninterrupted flow path.

Accordingly, the present invention relates to a High Pressure Liquid Chromatography (HPLC) system comprising at least two separation columns and at least two flow switching valves, wherein said flow switching valves are rotor-stator valves or contain rotor-stator valves and wherein each of said separation columns have their first end connected to a first flow switching valve and their second end to a second flow switching valve, characterized therein that said valves are configured to switchably connect said separation columns in a serial arrangement of two or more of said separation columns, wherein each serial arrangement of said separation columns provides a linear flow path. As used herein, the term "separation medium" is used to refer to the combinations of separation columns or column segments and its enclosing housing. The separation medium refers therefore to a serial arrangement of two or more separation columns or column segments. Said serial arrangement provides a linear arrangement of separation columns or column segments to form a unique and non-repetitive linear flow path. The linear flow path therefore refers to a flow path passing through two or more separation columns or column segments without passing trough a separation column more than once. The term linear flow path is hence also used here to refer to a non-cyclic or non-repetitive flow path. In case a cyclical arrangement of the separation columns or column segments would be used for chromatographic separations, the fastest running sample components risk to catch up with the slowest running sample components, hence destroying the separation. The use of cyclical arrangements is therefore limited to samples containing only very few components, that furthermore have very similar elution speeds such an enantiomeric separations.

The term "flow switching device" as used herein, refers to any device capable of redirecting fluid flows from one flow path into another. The term "connection recess" is used to refer to any groove machined in any possible part of the flow switching device.

An important feature for a good separation performance is that the dead volume of the internal circuitry of the flow switching device is very small. The flow switching device is therefore provided on a properly designed microfluidic chip with appropriate flow switching means known in the art, for example using a valve of the type described by Hongkai Wu et al., Proc Natl Acad Sci, 2004, 101(35), 12809-12813 or using a valve as described by Yamahata et al., Sensors and Actuators B, 2005, Volume 110, 1-7. It is well known to those skilled in the art that such microfluidic chips can also be made with very low internal volumes. Instead of using ball valves, the systems according to the present invention can also be provided with sliding valves (Berndt and Gassmann, 2007), or any other types of miniaturized valves known in the art.

The systems of the present invention have also been shown to withstand ultra-high pressures of more than 1000 bars needed in HPLC. Another important aspect of the present invention is that also readily available rotor-stator valves can be used as the flow switching device needed to fluidically connect the individual separation columns or column segments. Rotor-stator valves are nowadays commercially available with internal volumes in the micro-liter range and nano-liter range, and can be operated at pressures up to 1000 bar and more. Additionally Rotor-stator valves allow for a wide range of possible designs for the connection grooves that are recessed in the surface of their rotor part. Examples of flow switching devices as referred to in the present invention have bee described in WO2009003521, WO2009006933 and EP1624234.

Fig. 2 therefore shows one of the preferred embodiments according to the present invention, using one rotor-stator valve 20 with connection recesses 201,202,203 and six inlet ports (21,22,23,24,25,26). With the valve position shown in Fig. 2a, a two-coupled column system, involving columns 3,4 and connection capillaries 111,114,115, is obtained. With the valve position shown in Fig. 2b, a four-coupled column system, involving columns 1,2,3,4 and connection capillaries 110,111,112,113,114,115, is obtained. In some preferred embodiments, at least part of said connection capillaries can be integrated into a microfluidic chip device that can be clamped between the rotor and stator of a rotor-stator valve, using an approach similar to that described by Yin et al. (2005).

Still using one rotor-stator valve, but allowing two different outlet capillaries 90,91, which can possibly be recombined using a T-union piece or a multiplexed detector inlet before entering a detector, Fig. 3 shows how the two columns that are being used in the two-column system can be alternated. Whereas in Fig. 3a columns 1,2 are being interconnected in the uninterrupted flow path between injector and detector, the valve position in Fig. 3b provides a two-column system involving columns 3,4. The possibility to alternate the separation columns or column segments that are being used is highly advantageous because it allows prolonging the lifetime of the employed columns as well as the detection of defect columns. The defect columns can be detected by comparing the plate count obtained in trajectory 1,2 versus the plate count obtained in trajectory 3,4. It is therefore a distinguishing feature of some of the preferred embodiments according to the present invention that the columns taking part in an uninterrupted flow path with given length can be alternated by changing the switch positions of said flow switching devices.

The chromatographic separation system according to the present invention comprises at least two separation columns.

In other embodiments of the present invention, the chromatographic separation system according to the present invention comprises at least three, four, five or more separation columns wherein at least two of said separation columns are sequentially or serially coupled.

Preferably, the chromatographic separation system according to the present invention provides that the valves are configured to switchably connect between at least two different serial arrangements of separation columns, wherein at least 2 serial arrangements of separation columns comprise at least one mutual separation column.

The valves according to the present invention enable the chromatographic separation system of the present invention to switch from a first serial arrangement of separation columns or column segments to a second serial arrangement of separation columns or column segments. The number of serial arrangements of separation columns or column segments that may be connected to the valve depends on the type of valve used, and the configuration of the connection capillaries between the valve and the separation columns or column segments. In a preferred embodiment, the present invention provides that at least two of the serial arrangements of separation columns or column segments that can be connected by the valve comprise at least one mutual separation column. By at least one mutual separation column it is meant that a first serial arrangement of separation columns or column segments may comprise a separation column or column segment which is also embedded in the second serial arrangement of separation columns or column segments.

As a consequence the number of separation columns or column segments necessary to provide a large number of serial arrangements can be reduced significantly. For instance, if a valve may switch between a serial arrangement of 1, 2, 3 or 4 sequential separation columns or column segments only 4 separation columns or column segments are required according to the present invention whereas a system that switches between flow paths comprising either 1, 2, 3 or 4 separation columns or column segments need 10 different separation columns or column segments.

In a preferred embodiment, the system of the present invention provides that at least two uninterrupted flow paths containing the same number of columns are composed of columns with a different identity.

In another preferred embodiment, the present invention relates to a chromatographic separation system according to the invention, wherein said serial arrangements provide an alteration in the number, the order and/or the type of separation columns or columns segments in each serial arrangement.

The alteration in the number of separation columns or columns segments provides serial arrangements that differ form each other in the number of separation columns or columns segments taking part in the arrangement. The alteration of the order of separation columns or columns segments provides serial arrangements that differ form each other in the sequence or succession of the separation columns or columns segments in said arrangement. The alteration of the type of separation columns or columns segments provides serial arrangements that differ form each other in the kind or sort of the separation columns or columns segments in said arrangement. The present invention therefore provides alterations of the number, order and/or type of separation columns taken part in the different serial arrangements provided in the chromatographic separation system according to the present invention.

Usually, one will want to vary the type of the stationary phases, as well as the number of columns of each stationary phase, as is the case in the POP-LC system (K. Bischoff et al., 2006). A highly preferred embodiment will therefore comprise a column set that can be sub-divided into groups of at least two identical columns (identical in stationary phase composition). In this case, the number of different combinations that needs to be made is smaller than the case wherein all individual columns have a different identity.

Since the system provides at least two uninterrupted flow paths with the same number of columns, the columns being of a different identity, each of the uninterrupted flow paths can interchangeably be used to perform a chromatographic run. A defect in a column of a first uninterrupted flow path can be overcome by switching to a second uninterrupted flow path, being identical to the first one, but containing alternate or interchangeable columns.

In yet another embodiment, the present invention provides that at least one of the columns, being part of an uninterrupted flow path containing a lesser amount of columns, is needed to create an uninterrupted flow path containing a larger amount of columns.

In the present invention the flow switching device of the system according to the present invention is a rotor-stator valve or contains a rotor-stator valve. Said rotor-stator valves are preferably automated rotor-stator flow switching valves.

In another preferred embodiment of the present invention at least one additional flow switching device is intersected in said uninterrupted flow path.

In a more preferred embodiment of the present invention the system according to the present invention provides that at least one connection capillary is running directly between said first and said second rotor-stator valve.

Accordingly, the present invention regards a chromatographic separation system according to the present invention wherein said chromatographic separation system comprises at least two flow switching valves, wherein the first and second flow switching valve are directly connected through a connection capillary, wherein said connection capillaries are optionally filled with a dispersion reducing medium. More preferably said first and second flow switching valves are directly connected through at least two connection capillaries, wherein said connection capillaries are optionally filled with a dispersion reducing medium. The provision of at least at least two connection capillaries directly connect said first and said second flow switching valve without passing through a separation column provides the chromatographic separation system with a higher degree of flexibility. More combinations of separation columns can be provided when at least two connection capillaries directly connect said first and said second flow switching valve, thereby providing more possible alterations of the number, order and/or type of separation columns taken part in the different serial arrangements.

In a preferred embodiment, the number of return capillaries or connection capillaries directly connecting flow switching valves without passing through a separation column, as well as the number of circumferential ports, as well as the number of rotor stator ports is sufficiently large to allow making all possible combinations of a group of 4 columns consisting of 2 pairs of identical columns (with identity 1,1,2,2), or of a group of 6 columns consisting out of 3 pairs of identical columns (with identity 1,1,2,2,3,3) or consisting out of 2 triplets of identical columns (with identity 1,1,1,2,2,2).

Fig. 15 discloses a combination of 2 rotor-stator valves with 9 circumferential ports and being interconnected by 4 columns separation columns (two of type 1 and two of type 2) and 5 connection capillaries (130,131,132,133,134). With these arrangements, all different possible combinations consisting of 1,2,3,4 column segments can be made, as shown in the accompanying table.

The chromatographic separation system according to the present invention comprises separation columns or column segments, wherein each of said separation columns or column segments have their first end connected to a first flow switching valve and their second end to a second flow switching valve.

Fig. 4 shows one of the other preferred embodiments according to the present invention, using a second rotor-stator valve 30 with internal connection recesses 301,302,303, and additional connection capillaries 122,123,124,125,126 and with an additional column 5. Whereas the embodiments disclosed in Figs. 1-3 only allow the connection of different column sequences with an even number of return paths, the system represented in Fig. 4 enables the connection of different column sequences with an odd number of return paths.

The reader will appreciate that the embodiments in Figs. 1-4 do not allow to increase the total series length with one column unit at the time. Fig. 5 shows how the addition of an additional connection capillary 130 allows to change the length of the uninterrupted flow path with increments of one unit column length. If desired, this additional connection capillary can be replaced by an additional column or it can be filled using the same separation medium as that filling the other separation column or it can be filled using any other known packing material that can be used as a dispersion reducing medium. The dispersion reducing medium is preferably a material filling the column in such a way that it reduces the axial dispersion compared to that governing an empty column. If desired, also a parallel bundle of connection capillaries can be used.

Therefore, in a preferred embodiment, the present invention provides that at least one of said direct connection capillaries is filled with a dispersion reducing medium.

In a more preferred embodiment, the present invention provides that the connection recesses and the flow switching positions inside the flow switching devices, the connection capillaries and the columns are arranged such that the different switch positions of the flow switching devices correspond to uninterrupted flow paths with the same number of coupled columns but having different columns taking part in said flow path or wherein the order wherein the columns take part in said flow path is different.

In a more preferred embodiment of the present invention, the injection loop is integrated in the flow switching device.

In another preferred embodiment, the present invention provides that at least one of the N columns is packed with a separation medium that differs from the separation medium used in at least one of said other columns.

More preferably, the separation medium that differs from separation medium used in the other columns differs in one or more characteristics such as, but not limited to, the pore shape, pore size, pore morphology, and/or pore surface properties.

In yet another preferred embodiment, the present invention refers to a system wherein at least one of the flow controlling devices is motor-driven.

In a preferred embodiment of the present invention the chromatographic separation system according to the present invention provides that at least one of said separation columns or column segments comprises a chromatographic separation system according to the present invention. Accordingly, the present invention enables multiplexing the chromatographic separation system of the present invention.

Figure 14 shows such an example of such a design, wherein the individual column segments of the 4-column system shown in Fig. 6 each consist themselves of a chromatographic system comprising at least one flow switching device and a bundle of M column segments. In the particular case represented in Fig. 14, each system 501, 502, 503, 504 comprises two rotor-stator valves and a bundle of 5 column segments, each of which having its first end connected to the first of said rotor-stator valves and its second end to the second of said rotor-stator valves.

In a preferred embodiment of the present invention the chromatographic separation system according to the present invention comprises at least two independent coupled chromatographic separation systems according to the present invention in a multiplexed system of separation columns and flow switching valves, wherein said multiplexed system is arranged with at least one additional flow switching valve configured to switchably elute the separation systems in parallel and/or in series.

As used herein the term "multiplexed system" refers to a chromatographic separation system arranged such that the system comprises at least two of the chromatographic separation systems according to the present invention. The multiplexed system therefore refers to a modular system. The system is therefore subdivided into chromatographic separation system modules that can be independently used in the multiplexed system. The multiplex systems therefore provide a high degree of flexibility, creating the possibilities to augment or exclude certain modules, thereby adding new possibilities by merely plugging in a new module or removing outdated or dysfunctional modules.

Fig. 6 shows yet one of the other preferred embodiments according to the present invention. It is a variant of the embodiment shown in Fig. 5 wherein each connection path running between the first and the second rotor-stator valve have two interposed separation columns or column segments instead of only one. Although not represented in the drawing in Fig. 6, this embodiment allows to bring the two rotor-stator valves in close proximity, by bending the additional connection capillaries 132,133,134,135 over 180 degrees. This lay-out is highly advantageous because it allows to keep the return capillary 130 as short as possible.

Fig. 7 shows yet another embodiment according to the present invention, also using two rotor-stator valves, wherein rotor-stator valve 20 is intersected between five connection capillaries 114,115,116,125,126.

Fig. 8 not only shows how the use of two rotor-stator valves and an additional connection capillary allows to devise a solution wherein the column length increment can occur with steps of only one column unit, but it also illustrates how in some of the preferred embodiments according to the present invention the identity or the order of at least two of the columns taking part in an uninterrupted flow path with given length can be alternated without having to manually detach them. Fig. 8a-b show two possibilities to obtain a three-column sequence and Fig. 8c-d show two possibilities to obtain a three-column sequence. Without showing them, it can easily be verified that the device shown in Fig. 8 also allows to change into different single column, two-column and five-column systems, and also in other three- and four-column systems than those represented. The possibility to change the column heading the series of coupled columns is highly advantageous because it allows to alternate the segments that are exposed to the highest pressures. The possibility to change the identity of the columns that take part in a sequence with given length is also highly advantageous because it allows to detect faulty columns and to prolong the lifetime of the columns.

Fig. 9 shows a system according to the present invention using two rotor-stator valves, one of which is being arranged with 5 connection grooves and 12 circumferential ports and one central port, allowing to integrate a sample loop 400 in said 5-connection groove rotor-stator valve. Fig. 9a shows how the sample loop can be filled by flowing the sample through the sample loop 400 from the sample inlet port 401 to the sample outlet port 402. Providing just an example of the many possible variants of the embodiments according to the present invention, Figs. 9b-d then respectively show how the sample can be injected in a one-column, a three-column and a four-column system.

A key issue leading to a proper functioning of all devices according to the present invention is that the volumes of the connection tubing an capillaries can be kept as small as possible. Fig. 10 a shows how the use of two columns per column connection path in combination with a microfluidic flow switching device 20 containing four three-way valves 150,151,152,153 allows for a very compact design while yet the different positions of the valves in the flow switching device allow selecting between the use of either two columns, four columns or six columns. Fig. 10b shows a similar embodiment, now using a rotor-stator valve 20 with specially designed connection grooves 201,202,203,204,205,206,207,208,209 and using a microfluidic stator 21 carrying the connection grooves 113,114,115,116,117,118,119,120. Preferably said stator can be a microfluidic chip as described by Yin et al., 2005. In the position depicted in Fig. 10b, the pattern of connection grooves only connects columns 1a and 1b with injector and detector. With the rotor positions depicted in resp. Fig. 10c and 10d, the pattern of connection grooves respectively connects columns 1a,1b,2a and 2b (Fig. 10c) and columns 1a,1b,2a,2b,3a, and 3b (Fig. 10d).

More preferably the flow switch position of the flow switching valves, in the chromatographic separation system according to the present invention, is controlled by a computer program that can terminate a sequence of runs if a further increase in column length no longer leads to an improved chromatographic separation or if there are no longer any resolved peaks for which a change in column length leads to a column plate count that changes with a significantly different factor than the change in column plate count of the other peaks or if a given time limit is exceeded. An important advantage of the embodiments according to the present invention is that they allow for a new type of automatic method development, wherein changes in column length are included in the strategy to find the best separation resolution. These changes can be imposed in a predetermined series of different column lengths, but in a preferred mode of operation, improvements in column lengths can furthermore be provided using the information on the separation quality gathered during previous separation runs conducted on a coupled column system with a different length, order or composition. With respect to the above, it should be noted that with an improved column length we refer to a column length that resolves all components present in the sample to be analyzed with a resolution lying above a given threshold in a shorter time. Evidently, before the analysis time can be considered as a criterion, the best column length is of course that allowing to resolve the largest possible amount of components present in the sample. Since the number of these components is a priori unknown, a necessary condition for the chromatogram to display all different components in individual peaks is that the number of resolved components does not increase if the column length is increased. It goes without saying that this type of separation quality check is not possible if the method development would be run on a single column with given length. The systems according to the present invention hence enable a new type of method development, wherein changes in column length are included in the strategy to find the best separation resolution.

The "separation resolution" is generally defined (Neue, 1997) as the difference between the residence time of two subsequent peaks divided by the mean width of both peaks.

An additional advantage of the embodiments according to the present invention is that they also allow to detect overlapping components, i.e., different components that co-elute in a single same peak. This detection can be achieved in two ways. In a first, crude way, it can be verified whether an increase in column sequence length leads to an increased number of peaks or the appearance of "peak shoulders". In a second, and more refined way, it could be verified whether an increase in column length leads to peaks whose plate count increases with a smaller factor than the other peaks or whether a column length decrease leads to peaks whose plate count decreases with a smaller factor than the other peaks.

Both cases can be used as an indication of peak overlap because a peak that consists of two or more overlapping peaks will, if the column length is increased, be subjected to an additional band broadening, superposed on the band broadening coming from the additional length, because the distance between the centers of the two overlapping peaks will also increase with increasing length. This effect, which is not present in a peak that only consists of one component, will broaden the peak more strongly than the peaks that only consist of a single component. As a consequence, conducting experiments in columns with different length and checking whether there are peaks that show an anomalous change in peak width will allow detecting peaks that consist of several overlapping components, even though these peaks appear as a single peak on the chromatogram. The possibility to include this additional column length effect check is of course only possible if a system is used that allows to compare different column lengths.

A "peak shoulder' is known to those skilled in the art of chromatography as a deformation of the regular peak shape caused by the presence of a second peak co-elution with a first peak.

Therefore, in view of the above, it is a characteristic feature of the novel type of method development enabled by the systems according to the present invention that the sample can be guaranteed to be completely resolved without the need for additional human control or verification. The complete separation is guaranteed if the following "stop criterion" is satisfied: 1) a further increase in column length does not lead to an increased number of peaks or peak "shoulders" and 2), there are no more peaks for which a change in column length leads to a column plate count that changes with a significantly different factor than the change in column plate count of the other peaks. In the preceding sentence, the word "significant" relates to a difference that is larger than the usual uncertainty on plate count measurement and the notion " column plate count" relates to the number of theoretical plates that can be associated to a given peak after the effect of the extra-column band broadening has been eliminated. Since the number of coupled columns can in principle be made very long, up to several meters, and yielding hundred thousands of theoretical plates, the method could automatically continue its search for a solution wherein the sample is completely resolved until at least one of the two elements in the above stopping criterion is satisfied or until a given upper search time limit is reached. In order to prevent that pressure would become a limiting factor, separation columns or column segments with even larger particles may be added. For the most complex samples, this search might take very long, up to a few days, using a system with many and long separation columns or column segments, but the guarantee about the complete separation that can be obtained at the end of said search constitutes an important analytical advantage.

A possible flow diagram for a search method that can make the devices of the present invention operate according to the above separation solution strategy is given in Fig. 11. To work properly, said search method needs to be complemented with a method step that counts the total number of observable peaks and shoulders and calculates the peak-to-valley height or the separation resolution of each pair of subsequent peaks. If desired, additional check method steps can be added apart from the already introduced check method steps 801,802,803,804,805, or some of the method steps can be left out.

By following the proposed search method in an order of ever increasing column sequence lengths, notwithstanding with the possibility to return to a previous length if needed or desired, the search method will automatically arrive at an optimized separation process in such a way that simple separations will be carried out in a short column length, and hence in a short time. Furthermore, difficult separations in long column lengths can be performed without the need for a human interference.

If desired, the automated length search method can also be subjected to a given time limit for either the length of the optimized individual run, such that the automatic search method yields a method that does not exceed a given time limit, or for the total duration of the method development search. In a highly desired embodiment, the search method may also keeps track of the analysis time of each conducted run and selects the number of coupled separation columns or column segments and the mobile phase conditions such that a complete sample separation is obtained in the shortest possible time. One important item in such a minimal time search method is the feedback loop involving method step 902.

If desired, the selection of the chromatographic runs that are induced by different method steps 901, 902 and 903 of the flow diagram shown in Fig. 11 can be assisted using any of the mobile phase optimization methods used in state-of-the-art method development such as ChromSword or Dry Lab or ACD LC simulator. In a preferred embodiment, the method step 901 could also involve the exploration of different column or stationary phase chemistries.

The present invention further relates in another embodiment to a chromatographic device comprising an injector, a detector, connection capillaries, and at least one chromatographic separation system according to the present invention.

The present invention also relates in another embodiment to a method for selecting the optimal separation conditions to perform a chromatographic separation by performing at least two subsequent analysis runs using a chromatographic separation system according to the present invention or a chromatographic device according to the present invention, characterized therein that the number, order and/or type of said separation columns or column segments taking part in said subsequent separation runs can be varied by changing the flow switch position inside said flow switching device.

In a preferred embodiment, the present invention relates to a High Pressure Liquid Chromatographic (HPLC) separation system, comprising at least two automated rotor-stator flow switching valves and three or more separation columns, wherein each of said separation columns have their first end connected to a first flow switching valve and their second end to a second flow switching valve, wherein the first and second flow switching valve are interconnected by at least four connection paths, wherein at least three of said connection paths comprise at least one separation column and at least one of said connection paths comprises at least one connection capillary directly connecting said flow switching valves without passing through a separation column, said automated rotor-stator flow switching valves being configured to switchably connect said separation columns in a serial arrangement of two or more of said separation columns. More preferably, the first and second flow switching valve are interconnected by two or more connection paths comprising at least one connection capillary directly connecting said flow switching valves without passing through a separation column. Preferably, said connection paths running between said first and said second automated rotor-stator flow switching valves and comprising separation columns, comprise at least two serially coupled separation columns wherein the first separation column is connected to said first flow switching valve and the second separation column to said second flow switching valve, said first and second separation column being serially interconnected.

Therefore, in a preferred embodiment, the present invention relates to a method for determining the optimal number of chromatographic columns for a chromatographic separation, comprising the steps of:
(a) performing at least two chromatographic runs with different mobile phase conditions, thereby obtaining a chromatogram for each run;
(b) analyzing the obtained chromatograms,;
(c) determining from the analysis in step (b) the mobile phase conditions that provide an optimal chromatographic separation;
(d) performing at least one additional chromatographic run with an increased number of chromatographic columns, optionally with an altered mobile phase composition, and analyzing the obtained chromatograms according to step (b);
(e) comparing the chromatographic separation obtained in steps (d) and (b) thereby assessing whether a further improvement of the chromatographic separation can be obtained by an increase or decrease of the number of the chromatographic columns;
(f) performing one additional chromatographic run with an, according to step (e), increased or decreased number of chromatographic columns and determining the chromatographic separation parameters according to step (b); and;
(g) repeating steps (e) and (f) until the optimal number of chromatographic columns is reached, thereby determining the optimal number of chromatographic columns for a chromatographic separation.

In the analysis provided in step (b) preferably the number of peaks (nₚ), the number of peak shoulders and the peak resolution (Rₛ) are calculated per peak pair for each run. Also the width and height of the individual peaks may be analysed.

More preferably the present invention relates in another embodiment to a method for performing method development in chromatography, wherein the method according to the present invention comprises the steps of:
(a) performing at least two chromatographic separation runs on at least two serial arrangements of separation columns, said serial arrangements having a different number of separation columns;
(b) analyzing said chromatographic runs, thereby at least determining the number of peaks, the width and height of the individual peaks, the number of peak shoulders, the peak resolution per peak pair and/or the plate height;
(c) establishing from the analysis in step (b) whether the chromatographic separation can be improved by altering the number of separation columns in said chromatographic separation run;
(d) repeating steps (a), (b) and (c) if said chromatographic separation can be improved by altering the number of separation columns in said chromatographic separation run; and,
(e) terminating the sequence of chromatographic separation runs if an alteration of the column length no longer leads to an improved chromatographic separation.

In a preferred embodiment, the present invention relates to a method for performing method development in High Pressure Liquid Chromatography (HPLC), characterised by comprising the steps of:
(a) injecting sample mixtures and performing at least two chromatographic separation runs on at least two serial arrangements of separation columns, each serial arrangement comprising at least one separation column and said serial arrangements having a different number, order and/or type of separation columns, thereby obtaining a chromatogram of the separated sample for each chromatographic separation run;
(b) analyzing said chromatograms, thereby at least determining the number of peaks and the width and height of the individual peaks; and establishing from said analysis whether the chromatographic separation can be improved by altering the number, order and/or type of separation columns in said chromatographic separation run;
(c) altering the number, order and/or type of separation columns in said serial arrangement and repeating steps (a), (b) and (c), if said chromatographic separation can be improved by altering the number, order and/or type of separation columns in said chromatographic separation run; and,
(d) terminating the sequence of chromatographic separation runs if an alteration of the number, order and/or type of columns no longer leads to an improved chromatographic separation;
wherein the alteration of the number, order and/or type of separation columns on said serial arrangement is performed in an automated way using at least two automated rotor-stator flow switching valves.

The analysis according to step (b) preferably determines the number of peaks, the width and height of the individual peaks, the number of peak shoulders, the peak resolution per peak pair and/or the plate height for each chromatographic separation run.

Said injection of sample mixtures according to step (a) refers to the injection of samples into the chromatographic separation system. Said sample mixtures are refer to aliquots of a single sample.

More preferably, the present invention provides a method according to any of the methods of the present invention wherein at least two subsequent chromatographic runs are performed using a HPLC separation system comprising at least two automated rotor-stator flow switching valves and three or more separation columns, at least two of said flow switching valves being interconnected by at least four connection paths, wherein at least three of said connection paths comprise at least one separation column and at least one of said connection paths comprises at least one connection capillary directly connecting said flow switching valves without passing through a separation column, said flow switching valves being configured to switchably connect said separation columns in a serial arrangement of two or more of said separation columns, characterized by changing the flow switch position of said flow switching device and thereby varying the number, order and/or type of said separation columns taking part in said serial arrangements of said subsequent separation runs.

More preferably, the present invention provides a method according to any of the methods of the present invention wherein said automated rotor-stator flow switching valve is a motor-driven rotor-stator valve or contains a motor-driven rotor-stator valve controlled via an external controlling device automatically altering the number, order and/or type of said separation columns taking part in said serial arrangements of said subsequent separation runs.

More preferably the methods for performing method development in chromatography according to the present invention comprise either altering the number, order and/or type of separation columns in said serial arrangements.

Therefore, a computer program can be provided on a computer usable medium configured to carry out the method of the present invention and adapt the flow switch position of flow switching devices accordingly. The computer program thereby determines the optimal number of columns in the separation column and adapts the flow switch position of the flow switching devices.

More preferably the flow switch position of the flow switching valves, in the chromatographic separation system according to the present invention, is changed during separation.

Given the possibility to establish separation paths running along column segments containing different stationary phase chemistries, and given that in many cases some component pairs in a chromatogram would be better separated if separated on a column with a different stationary phase chemistry, it would be one of the additional advantages of the present invention to allow changing the separation path during a separation, sending a given critical pair through a column segment containing a different stationary phase chemistry than that present in the original flow path when this pair has reached a given point in separation path.

A computer program product for use in conjunction with a computer having a processor and a memory connected to the processor can be provided, said computer program product comprising a computer readable storage medium having a computer program mechanism encoded thereon, wherein said computer program mechanism may be loaded into the memory of said computer and cause said computer to carry out any of the methods according to the present invention.

In a more preferred embodiment the present invention relates to any of the method according to the present invention, wherein a chromatographic separation system according to the present invention, or a chromatographic device according to the present invention is used.

In an additional embodiment, the present invention relates to the system of the present invention wherein the flow switch position of the flow switching devices is determined by a computer program determining the optimal number of columns in the separation column and adapting the flow switch position of the flow switching devices, thereby changing the number of columns taking part in the uninterrupted flow path.

In yet another embodiment, the present invention refers to the system of the present invention wherein the computer program can terminate a sequence of runs if a further increase in column length no longer leads to an improved chromatographic separation, preferably identified by increased number of peaks or the appearance of novel "peak shoulders", or if there are no longer any resolved peaks for which a change in column length leads to a column plate count that changes with a significantly different factor than the change in column plate count of the other peaks or if a given time limit is exceeded.

In the preferred embodiments according to the present invention, the flow switching devices will also be controlled by a computer program that automatically induces regular performance tests on individual columns and on sub-sets of columns and uses this information to disfavor the use of any faulty columns from further use in any of the coupled column sequences that can be formed with the available columns and signals the need for replacement of the faulty columns. Such performance checks should preferably include a pressure drop test and the measurement of the plate count and retention factor of at least one standard test component.

In yet another embodiment, the present invention refers to the system of the present invention wherein the flow switch position of said flow switching device is controlled via an external controlling device running the computer program additionally performing automated regular performance tests on individual columns or a sub-set of columns and uses this information to disfavor the use of any faulty columns from further use in any of the possible coupled column sequences according to the present invention and signals their need for replacement.

Following best practice, the dilution of the peaks as they migrate over longer column lengths can be countered by using a larger injection volume injected in the longer column sequence than in the shorter column sequence. Said method controlling the length of the coupled column sequences should hence preferably also contain method steps adapting the injected sample volume to the employed column length.

To speed up the analysis, all runs should preferably be carried out at the maximal pressure limit of the instrument, except for the cases wherein separations in systems with different length need to be compared at the same velocity. In some of the preferred embodiments according to the present invention, the flow controlling devices are temperature controlled to ensure a constant temperature operation.

In a preferred embodiment, the present invention provides that at least one of said flow controlling devices is temperature controlled.

In yet another embodiment, the present invention refers to a system wherein at least two independent coupled column systems according to the present invention are combined in a multiplexed system of independent coupled column units, said multiplexed system being arranged with at least one additional flow switching device arranged with an internal network of connection recesses and a set of inlet and outlet ports such that said independent coupled column units can be eluted in parallel or in series or in a combination of both.

In another embodiment, the present invention relates to a device comprising at least one rotor-stator valve and a holder to contain N columns, with N being a number larger than 1, characterized therein that said rotor-stator valve contains an internal network of connection recesses and a set of inlet and outlet ports arranged such that they allow to alternate between different series connection combinations of columns selected among said N available columns.

In another embodiment, the present invention relates to a method for selecting the optimal separation conditions to perform a chromatographic separation by performing at least two subsequent analysis runs using a chromatographic separation medium, said separation medium being divided over N columns, with N being an integer number larger than 1, and at least two of said columns having their first end connected to a flow switching device, characterized therein that the number of columns taking part in said subsequent separation runs can be varied by changing the flow switch position inside said flow switching device.

In some of the preferred embodiments, the length of the individual separation columns or column segments can be variable. This will for example allow to increase the total column length with small increments in the short analysis time range and with larger increments in the large analysis time range.

In the basic embodiments according to the present invention, all columns are packed with particles with the same size and coating chemistry. In some of the more advanced embodiments, it is however preferred to have the individual columns filled with particles with different sizes while keeping the same coating chemistry. This allows modifying the total pressure-drop of the possible coupled column sequences. In addition, one could also couple columns filled with particles with a different coating chemistry. In this way, the selectivity of the separation can be enhanced.

With the coupled column systems according to the present invention, a variety of extensions are conceivable. One such an extension would be preferred if a chromatographer would want to test several stationary phase chemistries in parallel. In this case, he would be wanting to operate several coupled column systems according to the present invention in parallel (using one coupled column system per tested chemistry). If desired, such systems can be coupled in parallel by adding additional flow switching devices. Fig. 12 shows such a device, allowing to use three independent coupled column systems 500,501,502 in parallel using two additional rotor-stator valves 20 and 30. It goes without saying that the multiplexed systems according to the present invention can also involve a number of independent coupled column systems that is either larger or smaller than the three shown in Fig. 12, and might involve independent coupled column systems having a different internal flow lay-out than those represented in Fig. 12.

Furthermore, the devices according to the present invention also involve all conceivable embodiments wherein the individual columns in the systems represented by Figs. 1-10 are themselves independent coupled column units, each involving at least two columns and at least one flow switching device and coupled according to the present invention. In this way, several independent coupled column units can be utilized in parallel or coupled in series or in a combination of both.

In some of the embodiments according to the present invention, the rotor-stator valves 20 and 30 shown in Fig. 12 can be replaced by more advanced designs, with more positions and more connection , allowing to construct flow paths running along columns containing different stationary phase chemistries and allowing to change the order and number of these different stationary phase columns.

In some of the preferred embodiments, an additional pump can be used to run column regeneration programs on the columns that are not engaged in the actually eluted separation path.

Fig. 13 also shows that some of the preferred embodiments according to the present invention can be established using existing two-position, six port rotor-stator valve. Using two columns and one additional return capillary, this type of valve allows to couple (a) column 1 and (b) columns 1,2 in an uninterrupted flow path between injector and detector. Duplicating the system and putting both systems in series (Fig. 13c), an embodiment is obtained that allows to select between a coupled column sequence involving columns 1,3; one involving columns 1,2,3, one involving columns 1,3,4 and one involving columns 1,2,3,4. If desired, column 3 can be replaced by a connection capillary, so that the system allows to vary between one, two or three coupled column lengths.

Knowing that many LC-problems are nowadays being tackled by the so-called multi-LC approach wherein a column with a first chemistry is followed by a column with a second chemistry, both columns preferably being eluted with a different mobile phase, it is yet another advantage of the presently disclosed coupled column systems that they can also be used to replace at least one of said two multi-LC columns, such that at least one of the two column systems engaged in the resulting multi-LC system has an automatically adjustable length.

It goes without saying that by further increasing the complexity (i.e., increasing the number of individual coupled column systems, the number of flow switching devices, the number of connection capillaries and the number of internal connection grooves and inlet and outlet ports per flow switching device) systems with ever increasing complexity can be build that can be operated in series, parallel or by any combination of both.

Finally, it should be noted that, although most of the drawings of the presently disclosed systems only use four or five columns, many of the preferred systems according to the present invention contain less (i.e., two or three) or more (i.e., up to ten or twenty and possibly even up to 50 or more) columns. A similar remark holds for the rotor-stator valves that are being shown. Most of the represented rotor-stator valves only have one central and 6 circumferential ports, but there is no impediment to devise systems according to the present invention using rotor-stator valves with a smaller or larger number of central and circumferential ports and with a different number and a different orientation and shape of the connection grooves that are recessed in the rotor part of the valve.

According to another embodiment, the present invention refers to a method for performing method development in chromatography, comprising the steps of:
(a) injecting a sample mixture and performing a chromatographic run on a separation column distributed over at least one column, thereby obtaining a chromatogram of the separated sample;
(b) analyzing said chromatogram and determining whether the chromatographic separation can be improved either by increasing or decreasing the number of said columns; and,
(c) increasing or decreasing the number of columns in the separation column and repeating steps (a), (b) and (c) until an optimal chromatographic separation is obtained;
characterized therein that the alteration of the number of columns is performed in an automated way.

More preferably, the method according to the present invention uses the system or device of the present invention.

### EXAMPLE

The chromatographic separation system according to the present invention was used to perform a series of experiments wherein a alkylphenone mixture is separated into it's different components.

Fig. 16 and 17 show an example of how obtaining chromatograms on different column lengths can be used to identify co-eluting compounds. Ensuring that the mobile phase conditions (composition, gradient time and profile, relative dwell-time) are selected such that the retention times of the components on the different column lengths remain the same, the width of a single peak should normally increase with the square root of the column length, while its height should decrease with the same factor. If this is not the case, one can suspect that the eluting peak contains two or more co-eluting substances. Fig. 16a shows an analysis of an alkylphenone mixture on one separation column, while Fig. 16b shows the same analysis on a chromatographic separation system with a serial arrangement of two separation columns. Fig. 17 compares the ratio's of the plate numbers that can be associated to each peak (the peak plate number is used here as a measure for peak width). As can be noted from Fig. 17, peak nr. 5 displays a clearly smaller increment in plate number than the other peaks. Combining this information with the fact that the height peak nr. 5 also decreases much more strongly when going from one column to two columns than the height of the other peaks, one can conclude that peak nr. 5 probably consists of two closely eluting substances. Using this approach, wherein the peak width and peak height are compared on two different lengths, one can hence detect the presence of overlapping components without having to actually separate them. As a confirmation that peak nr. 5 indeed contains another component, we also analyzed the mixture on a chromatographic separation system with a serial arrangement of four separation columns (Fig. 16c), thereby showing the splitting of peak nr. 5 and thus confirming the existence of a 9th component in the mixture.

## Claims

1. Method for performing method development in High Pressure Liquid Chromatography (HPLC), comprising the steps of:
(a) injecting sample mixtures and performing at least two chromatographic separation runs on at least two serial arrangements of separation columns, each serial arrangement comprising at least one separation column and said serial arrangements having a different number, order and/or type of separation columns, thereby obtaining a chromatogram of the separated sample for each chromatographic separation run;
(b) analyzing said chromatograms, thereby at least determining the number of peaks and the width and height of the individual peaks; and establishing from said analysis whether the chromatographic separation can be improved by altering the number, order and/or type of separation columns in said chromatographic separation run;
(c) altering the number, order and/or type of separation columns in said serial arrangement and repeating steps (a), (b) and (c), if said chromatographic separation can be improved by altering the number, order and/or type of separation columns in said chromatographic separation run; and,
(d) terminating the sequence of chromatographic separation runs if an alteration of the number, order and/or type of columns no longer leads to an improved chromatographic separation;
wherein the alteration of the number, order and/or type of separation columns on said serial arrangement is performed in an automated way using at least two automated rotor-stator flow switching valves.

2. Method according to claim 1, wherein at least two subsequent chromatographic runs are performed using a HPLC separation system comprising at least two automated rotor-stator flow switching valves and three or more separation columns, at least two of said flow switching valves being interconnected by at least four connection paths, wherein at least three of said connection paths comprise at least one separation column and at least one of said connection paths comprises at least one connection capillary directly connecting said flow switching valves without passing through a separation column, said flow switching valves being configured to switchably connect said separation columns in a serial arrangement of two or more of said separation columns, **characterized by** changing the flow switch position of said flow switching device and thereby varying the number, order and/or type of said separation columns taking part in said serial arrangements of said subsequent separation runs.

3. Method according to claim 1 or 2, wherein said automated rotor-stator flow switching valve is a motor-driven rotor-stator valve or contains a motor-driven rotor-stator valve controlled via an external controlling device automatically altering the number, order and/or type of said separation columns taking part in said serial arrangements of said subsequent separation runs.

4. A High Pressure Liquid Chromatography (HPLC) system comprising at least two separation columns (1,2,3,4,5) and at least two flow switching valves (20,30), wherein said flow switching valves (20,30) are rotor-stator valves or contain rotor-stator valves and wherein each of said separation columns (1,2,3,4,5) have their first end (112,113,114,115,116) connected to a first flow switching valve (20) and their second end (122,123,124,125,126) to a second flow switching valve (30), characterized therein that said valves (20,30) are configured to switchably connect said separation columns (1,2,3,4,5) in a serial arrangement of two or more of said separation columns, wherein each serial arrangement of said separation columns provides a linear flow path.

5. HPLC system according to claim 4, wherein said valves (20,30) are configured to switchably connect between at least 2 different serial arrangements of separation columns, wherein at least 2 serial arrangements of separation columns comprise at least one mutual separation column.

6. HPLC system according to claims 4 or 5, wherein said serial arrangements provide an alteration in the number, the order and/or the type of separation columns in each serial arrangement.

7. HPLC system according to any of claims 4 to 6, comprising at least two flow switching valves (20,30), wherein the first (20) and second (30) flow switching valve are directly connected through at least two connection capillaries (130,131), wherein said connection capillaries are optionally filled with a dispersion reducing medium.

8. HPLC system according to any of claims 4 to 7, wherein at least one of said separation columns comprises a chromatographic separation system according to any of claims 4 to 9.

9. HPLC system according to any of claims 4 to 8, comprising at least two independent coupled chromatographic separation systems according to any of claims 4 to 8 in a multiplexed system of separation columns and flow switching valves, wherein said multiplexed system is arranged with at least one additional flow switching valve configured to switchably elute the separation systems in parallel and/or in series.

10. HPLC system according to any of claims 4 to 9, wherein the flow switch position of said flow switching valves is controlled by a computer program that can terminate a sequence of runs if a further increase in column length no longer leads to an improved chromatographic separation or if there are no longer any resolved peaks for which a change in column length leads to a column plate count or peak height that changes with a significantly different factor than the change in column plate count or the peak height of the other peaks or if a given time limit is exceeded.

11. HPLC system according to any of claims 4 to 10, wherein the flow switch position of said flow switching valves is changed during separation.

12. A HPLC device comprising an injector, a detector, connection capillaries, and at least one HPLC system according to any of claims 4 to 11.

## Patentansprüche

1. Verfahren zur Durchführung von Verfahrensentwicklung in der Hochdruck-Flüssigkeitschromatografie (HPLC), umfassend die folgenden Schritte:
(a) Einspritzen von Probenmischungen und Durchführen von mindestens zwei chromatografischen Trennversuchen bei mindestens zwei Reihenanordnungen von Trennsäulen, wobei jede Reihenanordnung mindestens eine Trennsäule umfasst und die Reihenanordnungen eine verschiedene Anzahl, Reihenfolge und/oder Art von Trennsäulen aufweisen, um dadurch ein Chromatogramm der getrennten Probe für jeden chromatografischen Trennversuch zu erhalten;
(b) Analysieren der Chromatogramme, um dadurch wenigstens die Anzahl von Spitzen und die Breite und Höhe der einzelnen Spitzen zu bestimmen; und Feststellen aus der Analyse, ob die chromatografische Trennung durch Ändern der Anzahl, Reihenfolge und/oder Art von Trennsäulen im chromatografischen Trennversuch verbessert werden kann;
(c) Ändern der Anzahl, Reihenfolge und/oder Art von Trennsäulen in der Reihenanordnung und Wiederholen der Schritte (a), (b) und (c), wenn die chromatografische Trennung durch Ändern der Anzahl, Reihenfolge und/oder Art von Trennsäulen im chromatografischen Trennversuch verbessert werden kann; und
(d) Beenden der Folge von chromatografischen Trennversuchen, wenn eine Änderung der Anzahl, Reihenfolge und/oder Art von Trennsäulen zu keiner verbesserten chromatografischen Trennung mehr führt;
wobei die Änderung der Anzahl, Reihenfolge und/oder Art von Trennsäulen bei der Reihenanordnung unter Verwendung von mindestens zwei automatisierten Rotor-Stator-Strömungsumschaltventilen automatisch erfolgt.

2. Verfahren nach Anspruch 1, wobei mindestens zwei aufeinander folgende chromatografische Versuche unter Verwendung eines HPLC-Trennsystems durchgeführt werden, das mindestens zwei automatisierte Rotor-Stator-Strömungsumschaltventile und drei oder mehr Trennsäulen umfasst, wobei mindestens zwei der Strömungsumschaltventile durch mindestens vier Verbindungswege miteinander verbunden sind, wobei mindestens drei der Verbindungswege mindestens eine Trennsäule umfassen und mindestens einer der Verbindungswege mindestens eine Verbindungskapillare umfasst, welche die Strömungsumschaltventile ohne durch Durchtreten durch eine Trennsäule direkt verbindet, wobei die Strömungsumschaltventile so konfiguriert sind, dass sie die Trennsäulen in einer Reihenanordnung von zwei oder mehreren der Trennsäulen umschaltbar verbinden, **gekennzeichnet durch** ein Ändern der Strömungsumschaltposition der Strömungsumschaltvorrichtung und **dadurch** Ändern der Anzahl, Reihenfolge und/oder Art der Trennsäulen, die in den Reihenanordnungen der aufeinander folgenden Trennversuche beteiligt sind.

3. Verfahren nach Anspruch 1 oder 2, wobei das automatisierte Rotor-Stator-Strömungsumschaltventil ein motorbetriebenes Rotor-Stator-Ventil ist oder ein motorbetriebenes Rotor-Stator-Ventil enthält, das über eine externe Steuervorrichtung gesteuert wird und die Anzahl, Reihenfolge und/oder Art der Trennsäulen ändert, die in den Reihenanordnungen der aufeinander folgenden Trennversuche beteiligt sind.

4. Hochdruckflüssigkeitschromatografie (HPLC)-System, umfassend mindestens zwei Trennsäulen (1, 2, 3, 4, 5) und mindestens zwei Strömungsumschaltventile (20, 30), wobei die Strömungsumschaltventile (20, 30) Rotor-Stator-Ventile sind oder Rotor-Stator-Ventile enthalten, und wobei jede der Trennsäulen (1, 2, 3, 4, 5) ihr erstes Ende (112, 113, 114, 115, 116) mit einem ersten Strömungsumschaltventil (20) und ihr zweites Ende (122, 123, 124, 125, 126) mit einem zweiten Strömungsumschaltventil (30) verbunden aufweist, **dadurch gekennzeichnet, dass** die Ventile (20, 30) so konfiguriert sind, dass sie die Trennsäulen (1, 2, 3, 4, 5) in einer Reihenanordnung von zwei oder mehreren der Trennsäulen umschaltbar verbinden, wobei jede Reihenanordnung der Trennsäulen einen linearen Strömungsweg bereitstellt.

5. HPLC-System nach Anspruch 4, wobei die Ventile (20, 30) so konfiguriert sind, dass sie zwischen mindestens 2 verschiedenen Reihenanordnungen von Trennsäulen umschaltbar eine Verbindung herstellen, wobei mindestens 2 Reihenanordnungen von Trennsäulen mindestens eine gemeinsame Trennsäule umfassen.

6. HPLC-System nach Anspruch 4 oder 5, wobei die Reihenanordnungen eine Änderung der Anzahl, Reihenfolge und/oder Art von Trennsäulen in jeder Reihenanordnung bereitstellen.

7. HPLC-System nach einem der Ansprüche 4 bis 6, umfassend mindestens zwei Strömungsumschaltventile (20, 30), wobei das erste (20) und das zweite (30) Strömungsumschaltventil durch mindestens zwei Verbindungskapillaren (130, 131) direkt verbunden sind, wobei die Verbindungskapillaren optional mit einem Dispersionsreduktionsmittel gefüllt sind.

8. HPLC-System nach einem der Ansprüche 4 bis 7, wobei mindestens eine der Trennsäulen ein chromatografisches Trennsystem nach einem der Ansprüche 4 bis 9 umfasst.

9. HPLC-System nach einem der Ansprüche 4 bis 8, umfassend mindestens zwei unabhängige chromatografische Trennsysteme nach einem der Ansprüche 4 bis 8 in einem Multiplexsystem von Trennsäulen und Strömungsumschaltventilen, wobei das Multiplexsystem mit mindestens einem zusätzlichen Strömungsumschaltventil ausgelegt ist, das so konfiguriert ist, dass es die Trennsysteme parallel zueinander und/oder hintereinander eluiert.

10. HPLC-System nach einem der Ansprüche 4 bis 9, wobei die Strömungsumschaltposition der Strömungsumschaltventile durch ein Computerprogramm gesteuert wird, das eine Folge von Versuchen beenden kann, wenn eine weitere Zunahme der Säulenlänge zu keiner verbesserten chromatografischen Trennung mehr führt oder wenn es keine aufgelösten Spitzen mehr gibt, für welche eine Änderung der Säulenlänge zu einer Säulenbodenzahl oder Spitzenhöhe führt, die sich mit einem wesentlich anderen Faktor als die Änderung der Säulenbodenzahl oder der Spitzenhöhe der anderen Spitzen ändert, oder wenn eine bestimmte Zeitgrenze überschritten wird.

11. HPLC-System nach einem der Ansprüche 4 bis 10, wobei die Strömungsumschaltposition der Strömungsumschaltventile während der Trennung geändert wird.

12. HPLC-Vorrichtung, umfassend einen Injektor, einen Detektor, Verbindungskapillaren und mindestens ein HPLC-System nach einem der Ansprüche 4 bis 11.

## Revendications

1. Procédé pour réaliser le développement de procédé en chromatographie liquide à haute performance (HPLC) comprenant les étapes :
(a) d'injecter des mélanges d'échantillon et d'effectuer au moins deux passes de séparation chromatographique sur au moins deux agencements en série de colonnes de séparation, chaque agencement en série comprenant au moins une colonne de séparation et les agencements en série présentant un nombre, un ordre et/ou un type différent de colonnes de séparation, obtenant ainsi un chromatogramme de l'échantillon séparé pour chaque passe de séparation chromatographique ;
(b) d'analyser les chromatogrammes, déterminant au moins ainsi le nombre de crêtes et la largeur et la hauteur des crêtes individuelles ; et d'établir à partir de l'analyse si la séparation chromatographique peut être améliorée en modifiant le nombre, l'ordre et/ou le type de colonnes de séparation dans la passe de séparation chromatographique ;
(c) de modifier le nombre, l'ordre et/ou le type de colonnes de séparation dans l'agencement en série et de répéter les étapes (a), (b) et (c), si la séparation chromatographique peut être améliorée en modifiant le nombre, l'ordre et/ou le type de colonnes de séparation dans ladite passe de séparation chromatographique ; et
(d) de terminer la séquence de passes de séparation chromatographique si une altération du nombre, de l'ordre et/ou du type de colonnes ne conduit plus à une séparation chromatographique améliorée ;
dans lequel l'altération du nombre, de l'ordre et/ou du type de colonnes de séparation sur l'agencement en série est effectué de manière automatisée en utilisant au moins deux soupapes de commutation de flux rotor-stator automatisées.

2. Procédé selon la revendication 1, dans lequel au moins deux passes chromatographiques consécutives sont effectuées en utilisant un système de séparation HPLC comprenant au moins deux soupapes de commutation de flux rotor-stator automatisées et trois colonnes de séparation ou plus, au moins deux des soupapes de commutation de flux étant interconnectées par au moins quatre chemins de branchement, dans lequel au moins trois des chemins de branchement comprennent au moins une colonne de séparation et au moins un des chemins de branchement comprend au moins un capillaire de branchement branchant les soupapes de commutation de flux sans passer à travers une colonne de séparation, les soupapes de commutation de flux étant configurées pour brancher de façon commutable les colonnes de séparation en un agencement en série de deux colonnes de séparation ou plus, **caractérisé par** la modification de la position du commutateur de flux du dispositif de commutation de flux et ainsi la variation du nombre, de l'ordre et/ou du type de colonnes de séparation faisant partie des agencements en série des passes de séparation consécutives.

3. Procédé selon la revendication 1 ou 2, dans lequel la soupape de commutation de flux rotor-stator automatisée est une soupape rotor-stator motorisée ou contient une soupape rotor-stator motorisée commandée via un dispositif de commande externe modifiant le nombre, l'ordre et/ou le type de colonnes de séparation faisant partie des agencements en série des passes de séparation consécutives.

4. Système de chromatographie liquide à haute performance (HPLC) comprenant au moins deux colonnes de séparation (1, 2, 3, 4, 5) et au moins deux soupapes de commutation de flux (20, 30), dans lequel les soupapes de commutation de flux (20, 30) sont des soupapes rotor-stator ou comportent des soupapes rotor-stator et dans lequel chacune des colonnes de séparation (1, 2, 3, 4, 5) a sa première extrémité (112, 113, 114, 115, 116) branchée à une première soupape de commutation de flux (20) et sa seconde extrémité (122, 123, 124, 125, 126) branchée à une seconde soupape de commutation de flux (30), **caractérisé en ce que** les soupapes (20, 30) sont configurées pour brancher de façon commutable les colonnes de séparation (1, 2, 3, 4, 5) dans un agencement en série de deux desdites colonnes de séparation ou plus, dans lequel chaque agencement en série des colonnes de séparation fournit un chemin d'écoulement linéaire.

5. Système HPLC selon la revendication 4, dans lequel les soupapes (20, 30) sont configurées pour se brancher de façon commutable entre au moins 2 agencements en série différents de colonnes de séparation, dans lequel au moins 2 agencements en série de colonnes de séparation comprennent au moins une colonne de séparation mutuelle.

6. Système HPLC selon la revendication 4 ou 5, dans lequel les agencements en série fournissent une altération dans le nombre, l'ordre et/ou le type de colonnes de séparation dans chaque agencement en série.

7. Système HPLC selon l'une quelconque des revendications 4 à 6, comprenant au moins deux soupapes de commutation de flux (20, 30), dans lequel la première (20) et la seconde (30) soupape de commutation de flux sont directement branchées par au moins deux capillaires de branchement (130, 131), dans lequel les capillaires de branchement sont remplis en option d'un agent de réduction de la dispersion.

8. Système HPLC selon l'une quelconque des revendications 4 à 7, dans lequel au moins l'une des colonnes de séparation comprend un système de séparation chromatographique selon l'une quelconque des revendications 4 à 9.

9. Système HPLC selon l'une quelconque des revendications 4 à 8, comprenant au moins deux systèmes de séparation chromatographique couplés indépendants selon l'une quelconque des revendications 4 à 8 dans un système multiplexé de colonnes de séparation et de soupapes de commutation de flux, dans lequel le système multiplexé est agencé avec au moins une soupape de commutation de flux supplémentaire configurée pour éluer de façon commutable les systèmes de séparation en parallèle et/ou en série.

10. Système HPLC selon l'une quelconque des revendications 4 à 9, dans lequel la position du commutateur de flux des soupapes de commutation de flux est commandée par un logiciel informatique qui peut achever une séquence de passes si une augmentation supplémentaire de la longueur de colonne ne conduit plus à une séparation chromatographique améliorée ou s'il n'y a plus de crêtes résolues pour lesquelles un changement de longueur de colonne conduit à une numération sur plaque de colonne ou une hauteur de crête qui se modifie avec un facteur bien différent de la modification dans la numération sur plaque de colonne ou la hauteur de crête des autres crêtes ou si une limite de temps donnée est dépassée.

11. Système HPLC selon l'une quelconque des revendications 4 à 10, dans lequel la position du commutateur de flux des soupapes de commutation de flux est modifiée pendant la séparation.

12. Système HPLC comprenant un injecteur, un détecteur, des capillaires de branchement et au moins un système HPLC selon l'une quelconque des revendications 4 à 11.
